# EUROPEAN PATENT SPECIFICATION

(11) **EP 1 637 440 B1**
(45) Date of publication and mention of the grant of the patent: **18.04.2007**
(21) Application number: 04425700.4
(22) Date of filing: 20.09.2004
(51) Int. Cl.: B62D 25/14, B60H 1/00

(54) **Support structure for a vehicle dashboard**
Trägerstruktur für das Armaturenbrett eines Kraftfahrzeugs
Structure de support pour la planche de bord d'un véhicule automobile

(43) Date of publication of application: 22.03.2006
(73) Proprietor: DENSO THERMAL SYSTEMS S.p.A., 10046 Poirino (Torino) (IT)
(72) Inventor: Scavino, Giovanni, 10046 Poirino (Torino) (IT); Bondon, Eloi, 10046 Poirino (Torino) (IT)
(74) Representative: Marchitelli, Mauro

(56) References cited:
- EP-B- 0 662 901
- DE-A1- 10 251 761
- US-A1- 2004 043 719
- US-A1- 2004 178 652

## Description

The present invention relates to a support structure for a dashboard for vehicles. More specifically, the invention relates to a support structure including a main transverse beam with tubular shape forming a transverse air distribution conduit and provided with at least two air outlet and with at least one central air inlet.

A support structure having the characteristics contained in the preamble of the main claim is illustrated in the document EP-A-662901, published as PCT application no. WO 94/07733.

The object of the present invention is to provide a support structure that, with respect to prior art solutions, has better strength characteristics and is capable of providing a better distribution of the air flows within the passenger compartment of the vehicle.

According to the present invention, said object is achieved by a support structure having the characteristics set out in the claims.

The features and the advantages of the structure according to the present invention shall become readily apparent from the detailed description that follows, provided purely by way of non limiting example, with reference to the accompanying drawings, in which:
- Figure 1 is a perspective schematic view showing a part of a dashboard assembly for a vehicle,
- Figure 2 is a front schematic view according to the arrow II of Figure 1,
- Figure 3 is a schematic cross section view of a dashboard for vehicles incorporating a support structure according to the present invention, and
- Figure 4 is a cross section similar to Figure 3 showing a variant of the air distribution system.

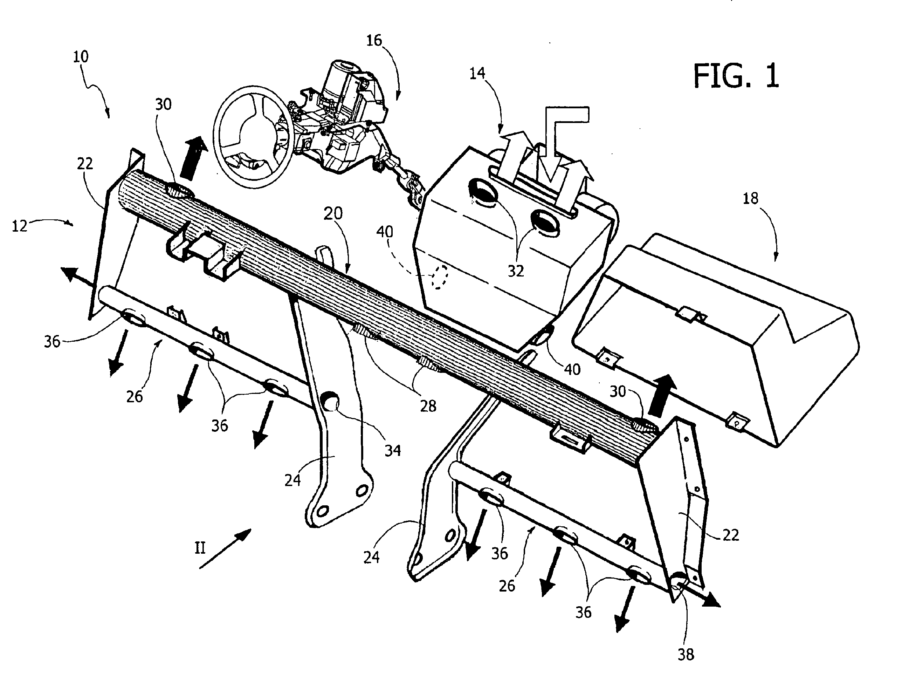

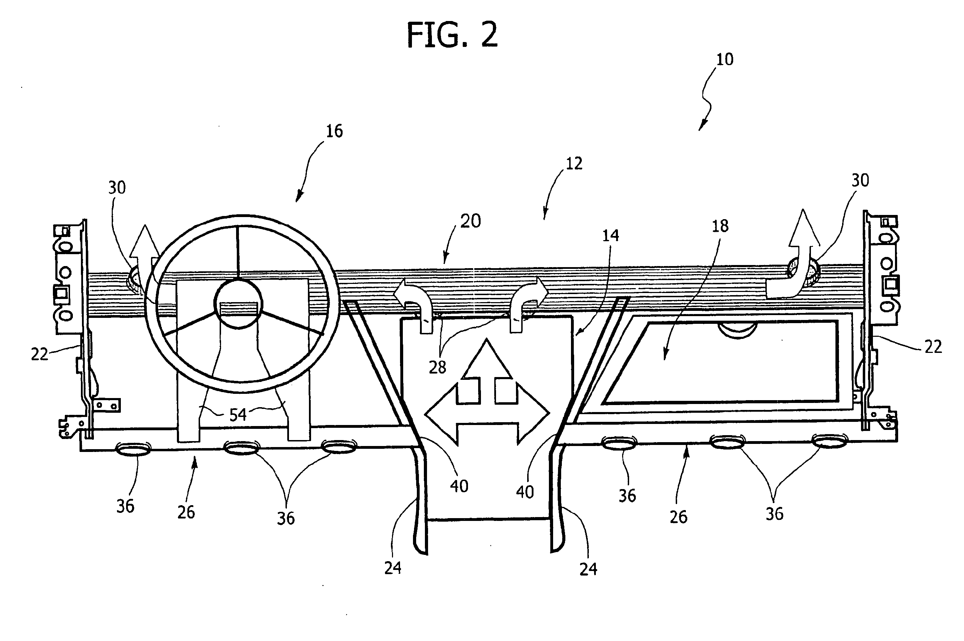

Figures 1 and 2 show a part of a dashboard assembly 10 for a vehicle. The dashboard assembly 10 comprises a support structure for example made of metallic material 12 which is fastened to the body of the vehicle. The support structure 12 has a load-bearing function for all the components of the dashboard assembly. As schematically shown in Figure 1, the support structure 12 bears an air treatment and distribution assembly 14, a steering assembly 16 and a glove compartment 18. The support structure 12 further bears the outer case of the dashboard (not shown) bearing the indicator instruments, the set of control members normally provided in a vehicle dashboard, including the controls of the air heating or conditioning assembly, and the central and lateral frontal nozzles for delivering air into the passenger compartment.

With reference to Figures 1 and 2, the support structure 12 comprises a main transverse beam 20 fastened at its ends to respective metal flanges 24 whose upper ends are fastened to the main transverse beam 20. The two central flanges 24 are distanced from each other in the transverse direction and define a seat in which the air treatment and distribution assembly 14 is housed.

The support structure 12 further comprises a secondary transverse beam 26 positioned below the main beams and whose ends are fastened to one of the central flanges 24 and to one of the lateral flanges 22. In the illustrated example, the support structure 12 comprises two auxiliary transverse beams 26 each fastened between a central flange 24 and the corresponding lateral flange 22.

The main tubular beam 20 can be made of bent and welded metal plate or it can be formed by light alloy extrusion. The main beam 20 has essentially the shape of a tube whose inner cavity forms an air distribution conduit. The inner wall of the main beam 20 defines the surface for guiding the flow of air and no additional conduits are necessary inside the main beam to guide the flow of air. The main beam 20 is provided with at least one central air inlet 28 and with at least two lateral air outlets 30. In the example shown in the figures, the main beam 20 is provided with two central inlets 28 connected to respective openings 32 of the air treatment and distribution assembly 14. The outlets 30 of the main beam 20 are connected to respective lateral nozzles (not shown) provided on the outer case of the dashboard.

Each of the two secondary beams 26 has the form of a tubular element whose inner surface constitutes a surface for guiding the air flow. Each secondary beam 26 is provided with an air inlet 34 and with at least one air outlet 36. In the illustrated example, the inlet 34 is formed at a front end of each beam 26 and a plurality of outlets 36 are provided (three in the illustrated example) formed on the lateral wall of each secondary beam 26. An additional air outlet 38 can also be provided at the front end of each beam 26 opposite with respect to the inlet 34. The inlets 34 are positioned at the central flanges 24 and communicate with respective outlets 40 of the air treatment and distribution assembly 14.

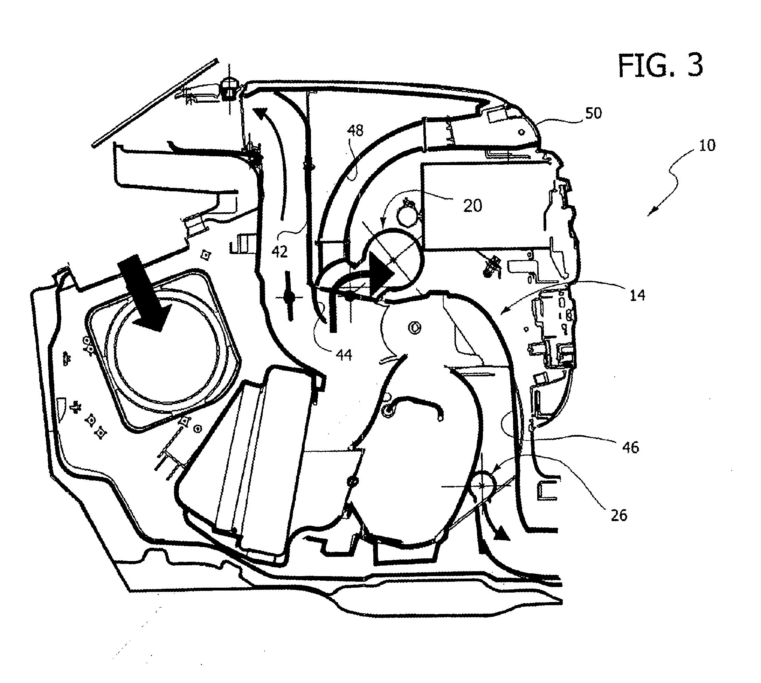

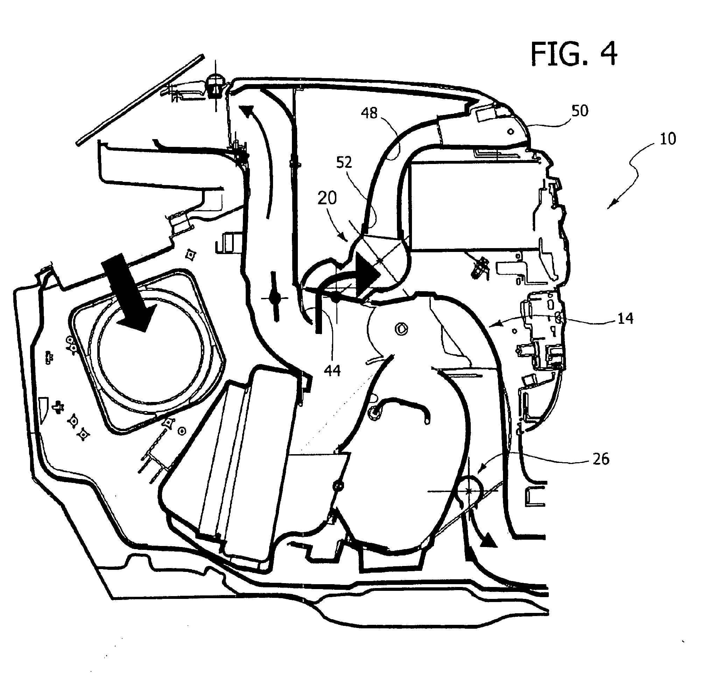

With reference to Figures 3 and 4, the air treatment and distribution assembly 14 comprises a conduit 42 to send a flow of air to the base of the front glass of the vehicle, a conduit 44 to convey a flow of air to the central and lateral frontal nozzles and a conduit 46 to convey a flow of air towards the feet of the occupants in the front seats of the vehicle. The conduit 44 communicates with the outlets 32 connected to the air inlets 28 of the main beam 20. The flow of air that enters the main beam 20 is conveyed towards the outlets 30 connected to the lateral frontal nozzles provided on the outer case of the dashboard of the vehicle. The dashboard assembly 10 schematically shown in Figures 3 and 4 also comprises a conduit 48 which feeds a flow of air to the central frontal nozzles designated by the reference 50 in Figures 3 and 4. In the embodiment shown in Figure 3, the conduit 48 communicates with the air distribution conduit 44 provided within the assembly 14. In the variant illustrated in Figure 4, the conduit 48 that feeds the flow of air to the central frontal nozzles 50 communicates with an outlet 52 provided on the outer wall of the main beam 20.

The conduit 46 of the air treatment and distribution assembly 14 communicates with the air inlets 34 of the secondary beams 26. The air flow that is conveyed in the secondary beams 26 escapes from the openings 36 positioned in such a way as to direct the flow of air towards the feet of the persons who occupy the front seats of the vehicle. If present, the openings 38 of the secondary beams can feed a flow of air to conduits that carry the flow of air towards the feet of the persons who occupy the rear seats of the vehicle.

The main beam 20 and the secondary beams 26, in addition to serving for the distribution of the flows of air towards the lateral frontal nozzles and towards the feet, serve to support all the components of the dashboard assembly 10. In particular, the air treatment and distribution assembly 14 is housed between the central flanges 24 which in turn are fastened to the main beam 20 and to the secondary beams 26. The steering assembly 16 is connected to the main beam 20 and to one of the secondary beams 26 by means of brackets, schematically designated by the reference number 54 in Figure 2. The glove compartment 18 is fastened in the space provided between the main beam 20 and the secondary beam 26 positioned in correspondence with the passenger side.

The support structure 12 according to the present invention is particularly strong and light thanks to the presence of the secondary beams 26 connected to the main beam by means of the lateral flanges 22 and the central flanges 24. This structure allows to obtain the distribution of the flows of air with no need to provide additional guiding conduits, exploiting as air distribution conduits the beams with structural function 20, 26.

## Claims

1. A support structure (12) for a dashboard assembly (10) for vehicles, comprising:
- a main transverse beam (20) with tubular shape forming a transverse air distribution conduit and provided with at least two end air outlets (30) and with at least one central air inlet (28),
**characterised in that** it comprises at least one secondary transverse beam (26) with tubular shape, positioned below the main beam (20) and defining a conduit for distributing air towards the feet of at least one of the occupants of the front seats of the motor vehicle.

2. Support structure as claimed in claim 1, **characterised in that** it comprises two lateral flanges (22) fastened to the ends of the main beam (20) and two central flanges (24) fastened to a central region of the main beam (20) and **in that** at least one secondary beam (26) is fastened between a central flange (24) and a corresponding lateral flange (22).

3. Support structure as claimed in claim 2, **characterised in that** it comprises two secondary beams (26) each of which is fastened between a central flange (24) and a corresponding lateral flange (22).

4. Support structure as claimed in claim 1, **characterised in that** the secondary beam (26) is provided with a plurality of outlets (36) formed on its lateral wall.

5. Support structure as claimed in claim 2, **characterised in that** said secondary beam (26) is provided with an end inlet (34) situated at said central flange (24).

6. Support structure as claimed in claim 1, **characterised in that** the main beam (20) is provided with an additional outlet (52) communicating with a conduit (48) for distributing air towards central frontal nozzles (50).

7. Support structure as claimed in claim 6, **characterised in that** said secondary beam (26) is provided with an end opening (38) connected to a conduit for feeding a flow of air to the rear seats of the vehicle.

## Patentansprüche

1. Tragstruktur (12) für eine Armaturenbretteinheit (10) für Fahrzeuge, wobei die Tragstruktur umfasst:
einen Hauptquerträger (20) mit einer röhrenförmigen Form, der einen querlaufenden Luftverteilungskanal bildet und mit wenigstens zwei Luftauslässen (30) und mit wenigstens einem zentralen Lufteinlass (28) versehen ist,
**dadurch gekennzeichnet, dass** sie wenigstens einen sekundären Querträger (26) mit röhrenförmiger Form umfasst, der unter dem Hauptträger (20) angeordnet ist und einen Kanal zum Verteilen von Luft in Richtung auf die Füße von wenigstens einem der Insassen der Vordersitze des Fahrzeugs definiert.

2. Tragstruktur nach Anspruch 1, **dadurch gekennzeichnet, dass** sie zwei an Enden des Hauptträgers (20) befestigte seitliche Flansche (22) und zwei an einem zentralen Bereich des Hauptträgers (20) befestigte zentrale Flansche (24) umfasst und dass wenigstens ein Sekundärträger (26) zwischen einem zentralen Flansch (24) und einem entsprechenden seitlichen Flansch (22) befestigt ist.

3. Tragstruktur nach Anspruch 2, **dadurch gekennzeichnet, dass** sie zwei Sekundärträger (26) umfasst, von denen jeder zwischen einem zentralen Flansch (24) und einem entsprechenden seitlichen Flansch (22) befestigt ist.

4. Tragstruktur nach Anspruch 1, **dadurch gekennzeichnet, dass** der Sekundärträger (26) mit einer Vielzahl von Auslässen (36), die in seiner Seitenwand ausgebildet sind, bereitgestellt ist.

5. Tragstruktur nach Anspruch 2, **dadurch gekennzeichnet, dass** der Sekundärträger (26) mit einem Endeinlass (34) versehen ist, der sich an dem zentralen Flansch (24) befindet.

6. Tragstruktur nach Anspruch 1, **dadurch gekennzeichnet, dass** der Hauptträger (20) mit einem zusätzlichen Auslass (52) versehen ist, der mit einem Kanal (48) zum Verteilen von Luft in Richtung auf zentrale vordere Düsen in Verbindung steht.

7. Tragstruktur nach Anspruch 6, **dadurch gekennzeichnet, dass** der Sekundärträger (26) mit einer Endöffnung (38) bereitgestellt ist, die an einen Kanal zum Zuführen eines Luftstroms zu den Rücksitzen des Fahrzeugs angeschlossen ist.

## Revendications

1. Structure de support (12) pour un assemblage de tableau de bord (10) pour véhicules, comprenant :
- une poutre transversale principale (20) de forme tubulaire formant un conduit transversal de distribution d'air et équipée d'au moins deux sorties d'air (30) situées aux extrémités et d'au moins une admission d'air centrale (28),
**caractérisée en ce qu'**elle comprend au moins une poutre transversale secondaire (26) de forme tubulaire, placée sous la poutre principale (20) et définissant un conduit de distribution d'air vers les pieds d'au moins un des occupants des sièges avants du véhicule automobile.

2. Structure de support selon la revendication 1, **caractérisée en ce qu'**elle comprend deux brides latérales (22) attachées aux extrémités de la poutre principale (20) et deux brides centrales (24) attachées à la région centrale de la poutre principale (20) et **en ce qu'**au moins une poutre secondaire (26) est attachée entre une bride centrale (24) et une bride latérale correspondante (22).

3. Structure de support selon la revendication 2, **caractérisée en ce qu'**elle comprend deux poutres secondaires (26), chacune d'entre elles étant attachée entre une bride centrale (24) et une bride latérale correspondante (22).

4. Structure de support selon la revendication 1, **caractérisée en ce que** la poutre secondaire (26) est équipée d'une pluralité de sorties (36) formées sur sa paroi latérale.

5. Structure de support selon la revendication 2, **caractérisée en ce que** ladite poutre secondaire (26) est équipée d'une admission d'extrémité (34) située sur ladite bride centrale (24).

6. Structure de support selon la revendication 1, **caractérisée en ce que** la poutre principale (20) est équipée d'une sortie supplémentaire (52) communiquant avec un conduit (48) pour la distribution d'air vers les buses frontales centrales (50).

7. Structure de support selon la revendication 6, **caractérisée en ce que** ladite poutre secondaire (26) est équipée d'une ouverture d'extrémité (38) reliée à un conduit pour alimenter un flux d'air vers les sièges arrière du véhicule.
